# EUROPEAN PATENT APPLICATION

(11) **EP 4 141 814 A1**
(43) Date of publication of application: **01.03.2023**
(21) Application number: 21193331.2
(22) Date of filing: 26.08.2021
(51) Int. Cl.: G06V 20/56, G06V 10/56, G06V 10/44

(54) **METHOD AND DEVICE FOR DETERMINING A COLOR OF A LANE MARKING**

(71) Applicant: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(57) **Abstract**

Provided is a method for determining a color of a lane marking for an automated vehicle. The method comprises a step of determining a focus area inside the lane marking, and a step of determining the color of the lane marking by measuring a color inside the focus area.

## Description

The present invention is directed to a method for determining a color of a lane marking for an automated vehicle, a control unit being configured to carry out the method and an automated vehicle comprising the control unit.

In autonomous driving detection of objects, obstacles and driving lanes plays a pivotal role for higher level of autonomy.

US 2016/350603 A1 describes a method for lane detection. The method for lane detection includes generating an edge image including inbound edges of lane-markings corresponding to a road image. Based on an adaptive thresholding of intensity of lane-markings from image strips selected from the image, a plurality of lane masks are extracted. A plurality of valid lane masks are selected from the plurality of lane masks based on a structure and intensity information of the plurality of valid lane masks in the image strips. An overlap between the inbound edges and the valid lane masks is determined to identify a plurality of edge segments of the pair of inbound edges belonging to the lane-markings. A set of valid edge segments of the pair of inbound edges are obtained based on the curvature information of the edge segments.

US 2021/094566 A1 describes a method for detecting a lane for a transverse guidance of a vehicle. The transverse guidance of the vehicle is based on a roadway model. The method has the steps of ascertaining one or more features which are suitable for influencing the detection of the lane; detecting a lane on the basis of a sensor system of the vehicle; and ascertaining the roadway model on the basis of the detected lane and the ascertained one or more features. The method optionally has the steps of additionally receiving navigation data and transversely guiding the vehicle on the basis of the ascertained roadway model.

In this context, a detection of a color of a lane marking, especially with ASIL integrity, is very important, e.g., considering a vehicle reaction in case the lane marking color changes from white lanes to yellow lanes (at least in Europe) indicating a construction/obstruction on the road. Such kind of scenarios are important to identify and react automatically/automated without a need for human intervention.

However, known methods for determining a color of a lane marking often use the edges of the detected lane marking for determining the color of the lane marking. Such methods are often not reliable enough to be used in (highly) automated driving.

In light of this prior art, the object of the present invention is to provide a device and/or a method being suitable for overcoming at least the above-mentioned disadvantages of the prior art, respectively.

The object is solved by the features of the independent claim. The dependent claims have preferred further embodiments of the invention as their subject matter.

More specifically, the object is solved by a method for determining a color of a lane marking for an automated vehicle.

The method is characterized by comprising a first step of determining a focus area inside the lane marking, and a second step of determining the color of the lane marking by measuring a color inside the focus area.

In other words, this approach is a method to detect a color of a lane with safety integrity not only for host lanes but also adjacent lanes of the automated vehicle.

That is, the lane marking may be a marking or boundary limiting a lane where the automated vehicle is currently located, e.g., driving, and/or limiting an adjacent lane of the automated vehicle. The lane marking may also be called road painting or road marking.

Here, the disadvantage of determining the color of the lane marking, especially solely, at the edge thereof, as done in the state of the art, is avoided by defining the focus area, i.e., a measuring area, inside the lane marking. Thus, the color of the lane marking may be reliably, e.g., with ASIL integrity, determined and thus may be used in (highly) automated driving.

The focus area may have a round or a circular outer shape, but is not limited thereto and may have any other outer shape, e.g., a square, rectangle or any other shape. The focus area may be fully/completely located inside the lane marking.

Determining the focus area may include detecting an outer edge and an inner edge of the lane marking with respect to a middle of a lane where the automated vehicle is located. A center of the focus area may be located between the outer edge and the inner edge of the lane marking.

The edge may also be called a boundary limiting the lane marking on its left or right side.

Detecting the inner and the outer edge of the lane marking may include generating an edge image based on an image captured by a camera, i.e. based on camera data, corresponding to an environment of the automated vehicle.

Additionally, determining the focus area may include determining a spline being located between the outer edge and the inner edge of the lane marking, wherein the center of the focus area is located on the spline.

The spline may be a function defined piecewise by polynomials or a piecewise polynomial (parametric) curve. The spline may be used because of the simplicity of its construction, its ease and accuracy of evaluation, and its capacity to approximate complex shapes through curve fitting and interactive curve design.

Additionally, determining the spline may include determining a further spline corresponding to a run of the middle of the lane where the automated vehicle is located and determining the spline being located between the outer edge and the inner edge of the lane marking based on the determined further spline.

More specifically, by using a spline a middle of the lane of the automated vehicle may be determined as, i.e., represented by, a defined curve. By knowing a width of the lane, the spline following the middle of the lane can be used, i.e., shifted to the left and/or the right by substantially half the width of the lane, to determine the spline running through the lane marking, preferably through the middle of the lane marking.

Additionally or alternatively, determining the focus area may include detecting a first edge of the lane marking. The first edge may be substantially perpendicular to the outer edge and the inner edge of the lane marking. Additionally or alternatively, determining the focus area may include detecting a second edge of the lane marking. The second edge of the lane marking may be substantially perpendicular to the outer edge and the inner edge of the lane marking. The first edge may be closer to the automated vehicle than the second edge. The center of the focus area may be located between the first and the second edge.

Determining the first edge of the lane marking, i.e., a back boundary of the lane marking, and the second edge of the lane marking, i.e., a front boundary of the lane marking, may be necessary when the lane marking is segmented to avoid determining a color of the road between two segments of lane marking inadvertently as the color of the lane marking.

Additionally or alternatively, determining the focus area may include determining at least two, preferably more than two, more preferably 2 to 5, sub focus areas. However, there may be more than 5 sub focus areas depending on accuracy requirements. The color of the lane marking may be determined by measuring a color inside the at least two sub focus areas.

The size of the focus area may or may not be equal to the inner edge and the outer edge. The at least two sub focus areas may have a predefined overlap. That is, to higher the reliability of the measurement of the color of the focus area the sub focus area may be located at least partly in the same area such that the color is measured substantially at the same spot or in the same area for at least two times thereby providing the possibility to double, i.e., cross, check the two (optionally consecutive) measurements.

The at least two sub focus areas may have the same or a different outer shape, e.g., a round or a circular outer shape, but is not limited thereto and may have any other outer shape, e.g., a square, rectangle or any other shape.

Additionally or alternatively, measuring the color inside the focus area may include multiple color measurements carried out in each one of the at least two sub focus areas to determine the color of the lane marking.

Measuring the color inside the focus area may be implemented by a deterministic algorithm.

Additionally or alternatively, determining the focus area inside the lane marking and/or determining the color of the lane marking by measuring the color inside the focus area may be done using camera data provided by a camera installed at the automated vehicle.

The camera may be configured to provide image data, i.e., frames, corresponding to an environment of the automated vehicle. The image data may be color image data, grayscale image data and/or black and white image data. Measuring the color using the image data may include measuring or determining a reflectivity inside the focus area.

Determining the focus area inside the lane marking and/or determining the color of the lane marking by measuring the color inside the focus area may be done for at least two consecutive frames of the camera data. That is, the camera data may be video data. Additionally, the method may include crosschecking the determined color of the at least two consecutive frames of the camera data.

The method may be carried out for at least two consecutive segments of the lane marking.

That is, the lane marking may be a solid lane and/or may be a dashed/dotted lane. The segments of the lane marking may be represented by squares using the outer and the inner edge as well as the first and the second edge determined as described above.

The method may include crosschecking the determined color of the at least two consecutive segments of the lane marking.

The above crosschecking or double checking leverages the reliability of the color of the lane marking determined with the above described method such that ASIL integrity/conformity can be provided.

Here ASIL is the Automotive Safety Integrity Level which is a risk classification scheme defined by the ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements.

There are four ASILs identified by the standard: ASIL A, ASIL B, ASIL C, ASIL D. ASIL D dictates the highest integrity requirements on the product and ASIL A the lowest. Hazards that are identified as QM do not dictate any safety requirements.

The description given above with respect to the method may be summarized in other words and with respect to a more concrete implementation as described in the following.

A vision system, e.g., a (optionally front) camera and/or a surround view camera, could be used to detect host lanes and adjacent lanes of the host vehicle. The host vehicle is an automated vehicle, e.g., an automated car.

More specifically, the sensor data from multiple, especially consecutive, frames captured and provided by the vision system may be used to detect the host lane and optionally adjacent lane markings.

The lane marking width and length may be determined, wherein the lane marking may be detected either as a bounding box or as an object with given length and width.

The basic idea behind the method may be formulated as to detect the color of the lane marking inside the width of a given lane marking bounding box, wherein the lane marking bounding box may be determined in advance based on sensor data provided by the vision system. That is, the information about where the lane marking is located can be seen as input data provided for the method for detecting the color of the lane marking.

A spline, i.e., a polynomial curve, may provide the center of the host lane. This spline, which may also be seen as input data provided for the method for detecting the color of the lane marking, may be used in the method as a reference to create a further spline running through the lane marking bounding box (especially through the center of the lane marking bounding box and in case of multiple lane marking bounding boxes corresponding to multiple segments of lane markings through the center of each lane marking bounding box).

Substantially the center of the lane marking bounding box may be used to locate the focus area for checking/measuring the color of the lane marking.

Multiple focus areas may be used to detect the lane properties (here the lane properties needed to determine the color inside the focus area). That is, multiple focus area may be used for the one single lane marking segment. For example, at least three focus areas with certain overlap located around the center of the lane marking bounding box may be used for multiple measurements, respectively. The focus areas may be located for example in an area being substantially equal to 30% of the area of the whole lane marking segment around the center of the respective segment.

That is, the lane color checker focus may start from the center of the bounding box or at the middle of the lane marking by drawing a perpendicular line to the spline located between the first and the second edge and cutting the width of the lane.

Similar measurements may be done for multiple, e.g., at least 3 to 5 frames of lane information, and/or multiple, e.g., 3 to 5, lane segments.

The color measurements could be implemented as deterministic algorithm so that optimum calculation power could be used instead of high power models (either neural network or machine learning models). The color confidence could also be calculated based on how many measurements are aligned with respect to a multiple frames and/or a multiple lane segments.

The calculation may be deterministic to provide the required output in a given Fault Tolerant Time Interval (FTTI).

Furthermore, a control unit and an automated vehicle comprising the control unit are provided. The control unit is configured to carry out the above described method at least partly.

The description given above with respect to the method applies mutatis mutandis to the control unit and the automated vehicle, and vice versa.

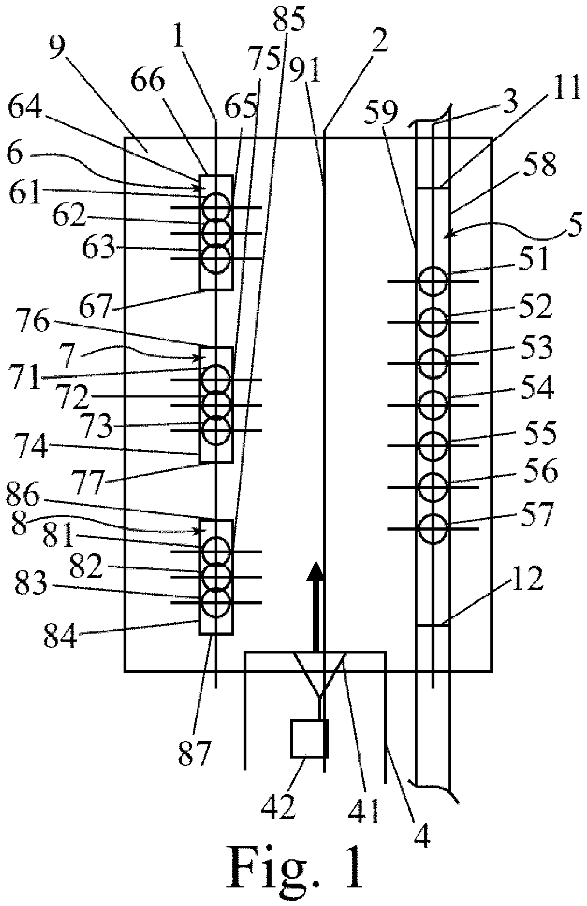

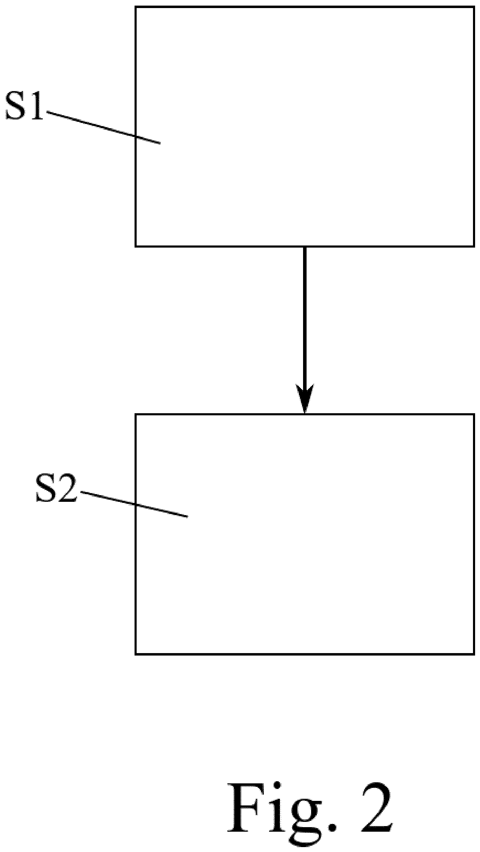

An embodiment is described with reference to figures 1 and 2 below.
- Fig. 1: schematically shows an automated vehicle comprising a control unit being configured to carry out a method for determining a color of a lane marking, and
- Fig. 2: schematically shows a flow chart of the method for determining the color of the lane marking carried out by the control unit of the automated vehicle shown in figure 1.

In figure 1 an automated vehicle 4 comprising a vision system, here a front camera 41, and a control unit 42 being connected to the front camera 41 is shown. The control unit 42 being configured to carry out the method for determining a color of a lane marking, wherein a flow chart of the method is shown in figure 2.

Therefore, the control unit 42 receives sensor data from the vision system, i.e. from the camera 41, as input data to carry out the method. Here, the camera data comprises consecutive captured images of the surrounding in front of the automated vehicle 4.

Here, a lane marking comprising three lane marking segments 6, 7, 8 located on a left side of the automated vehicle 4 and one lane marking segment 5 located on the right side of the automated vehicle 4 are in a field of view of the camera 41. The lane marking is a lateral boundary for a host lane 9, i.e., the lane where the automated vehicle 4 is currently located.

For each segment 5, 6, 7, 8 the control unit 42 determines in a first step S1 of the method multiple focus areas 51 - 57, 61 - 63, 71 - 73, 81 - 83, respectively, wherein each one of the focus areas 51 - 57, 61 - 63, 71 - 73, 81 - 83 is located completely/fully inside the respective lane marking segment 5, 6, 7, 8,

For each segment 5, 6, 7, 8 the control unit 42 determines in a second step S2, running in parallel or after the first step, the color of the respective segment 5, 6, 7, 8 of the lane marking by measuring a color inside the focus areas 51 - 57, 61 - 63, 71 - 73, 81 - 83 of the respective segment 5, 6, 7, 8.

Determining the focus areas 51 - 57, 61 - 63, 71 - 73, 81 - 83 in the first step S1 includes detecting an outer edge 58, 64, 74, 84 and an inner edge 59, 65, 75, 85 of each one of the segments 5, 6, 7, 8 of the lane marking with respect to a middle 91 of the lane 9.

Determining the focus area 51 - 57, 61 - 63, 71 - 73, 81 - 83 also includes, at least for the segments 6, 7, 8 on the left side of the vehicle 4, detecting a first and second edge 67, 77, 87, 66, 76, 86 of the respective segment 6, 7, 8 of the lane marking, wherein both edges 67, 77, 87, 66, 76, 86 are substantially perpendicular to the outer edge 64, 74, 84 and the inner edge 65, 75, 85 of the respective segment 6, 7, 8 of the lane marking. The first edge 67, 77, 87 is closer to the automated vehicle 4 than the second edge 66, 76, 86. Since the segment 5 of the lane marking on the right side of the vehicle 4 is a solid lane and not a dashed/dotted lane like the for the segments 6, 7, 8 on the left side of the vehicle 4, it might not be possible to detect the first and the second there. Therefore, the first edge 12 and the second edge 11 may be defined having a predetermined distance to the automated vehicle 4.

Furthermore, determining the focus areas 51 - 57, 61 - 63, 71 - 73, 81 - 83 may include determining two splines 1, 3, wherein a first one of the two splines 1 is located between the outer edge 64, 74, 84 and the inner edge 65, 75, 85 of the segments 6, 7, 8 of the lane marking being located on the left side of the automated vehicle 4 and a second one of the two splines 3 is located between the outer edge 58 and the inner edge 50 of the segment 5 of the lane marking being located on the right side of the automated vehicle 4.

The two splines are generated/determined making use of a further/third spline 2. The third spline 2 corresponds to a run of the middle 91 of the host lane 9. The third spline 2 may be generated by the control unit 42 before or during carrying out the method or may be received from the control unit 42 as input data for the method. Based on the third spline 2 and with knowledge of a width of the host lane 9, the two splines 1, 3 may be generated by the control unit 4.

The center of each one the focus areas 51 - 57, 61 - 63, 71 - 73, 81 - 83 is located on the respective spline 1, 3 running through the respective segment 5, 6, 7, 8 of the lane marking, such that the center of each one the focus areas 51 - 57, 61 - 63, 71 - 73, 81 - 83 is located between the outer edge and the inner edge of the lane marking, and furthermore the center of each one of the focus areas 51 - 57, 61 - 63, 71 - 73, 81 - 83 is located between first and the second edge 67, 77, 87, 66, 76, 86, 11, 12 of the respect segment 5, 6, 7, 8 of the lane marking.

In other words, the spline 1, 3 should be located at the center of a respective bounding box marking the lane segments 5, 6, 7, 8 and the respective focus area 51 - 57, 61 - 63, 71 - 73, 81 - 83 may (or may not be) located according to the respective spline 1, 3.

The centers of the focus areas 61 - 63, 71 - 73, 81 - 83 and the circular outer shape thereof have such dimensions that they partly overlap inside the respective segment 6, 7, 8 on the left side of the automated vehicle 4.

In the second step S2, measuring the color inside each one of the focus areas 51 - 57, 61 - 63, 71 - 73, 81 - 83 includes multiple color measurements, especially in the overlapping areas, wherein measuring the color inside the focus areas is implemented by or using a deterministic algorithm. The color measurements in the multiple segments 5, 6, 7, 8, especially in the overlapping areas, allow for crosschecking the measured and also the determined color inter and intra the segments 5, 6, 7, 8.

The above described first and second step S1, S2 of the method may be performed for two consecutive frames of camera data, i.e., determining the focus area inside the lane marking in the first step S1 and determining the color of the lane marking by measuring the color inside the focus area in the second step S2 may be performed for two images captured consecutively by the camera 41. This allows for crosschecking the determined color of the at least two consecutive frames of the camera data.

Moreover, since the color is determined for three consecutive segments 6, 7, 8 and for four segments 5, 6, 7, 8 separately, crosschecking the measured and also the determined color inter and intra the segments 5, 6, 7, 8 is possible.

### Reference signs

- 1 - 3: spline
- 4: automated vehicle
- 41: front camera
- 42: control unit
- 5 - 8: segment
- 51 - 57, 61 - 63, 71 - 73, 81 - 83: focus area
- 58, 64, 74, 84: outer edge
- 59,65,75,85: inner edge
- 12, 67, 77, 87: first edge
- 11, 66, 76, 86: second edge
- 9: host lane
- 91: middle of the host lane
- S1, S2: steps of the method

## Claims

1. Method for determining a color of a lane marking (5 - 8) for an automated vehicle (4), **characterized in that** the method comprises:
- determining (S1) a focus area (51 - 57, 61 - 63, 71 - 73, 81 - 83) inside the lane marking (5 - 8), and
- determining (S2) the color of the lane marking (5 - 8) by measuring a color inside the focus area (51 - 57, 61 - 63, 71 - 73, 81 - 83).

2. Method according to claim 1, **characterized in that** determining (S1) the focus area (51 - 57, 61 - 63, 71 - 73, 81 - 83) includes detecting an outer edge (58, 64, 74, 84) and an inner edge (59, 65, 75, 85) of the lane marking (5 - 8) with respect to a middle (91) of a lane (9) where the automated vehicle (4) is located, wherein a center of the focus area (51 - 57, 61 - 63, 71 - 73, 81 - 83) is located between the outer edge (58, 64, 74, 84) and the inner edge (59, 65, 75, 85) of the lane marking (5 - 8).

3. Method according to claim 2, **characterized in that** determining (S1) the focus area (51 - 57, 61 - 63, 71 - 73, 81 - 83) includes determining a spline (1, 3) being located between the outer edge (58, 64, 74, 84) and the inner edge (59, 65, 75, 85) of the lane marking (5 - 8), wherein the center of the focus area (51 - 57, 61 - 63, 71 - 73, 81 - 83) is located on the spline (1, 3).

4. Method according to claim 3, **characterized in that** determining (S1) the spline includes determining a further spline (2) corresponding to a run of the middle (91) of the lane (9) where the automated vehicle (4) is located and determining the spline (1, 3) being located between the outer edge (58, 64, 74, 84) and the inner edge (59, 65, 75, 85) of the lane marking (5 - 8) based on the determined further spline (2).

5. Method according to any of claims 2 to 4, **characterized in that** determining the focus area (51 - 57, 61 - 63, 71 - 73, 81 - 83) includes:
- detecting a first edge (12, 67, 77, 87) of the lane marking being substantially perpendicular to the outer edge (58, 64, 74, 84) and the inner edge (59, 65, 75, 85) of the lane marking (5 - 8), and
- detecting a second edge (11, 66, 76, 86) of the lane marking being substantially perpendicular to the outer edge (58, 64, 74, 84) and the inner edge (59, 65, 75, 85) of the lane marking (5 - 8),
- wherein the first edge (12, 67, 77, 87) is closer to the automated vehicle (4) than the second edge, and
- wherein the center of the focus area (51 - 57, 61 - 63, 71 - 73, 81 - 83) is located between first edge (12, 67, 77, 87) and the second edge (11, 66, 76, 86).

6. Method according to any of claims 1 to 5, **characterized in that** determining the focus area (51 - 57, 61 - 63, 71 - 73, 81 - 83) includes determining at least two, preferably more than two, more preferably two to five, sub focus areas, wherein the color of the lane marking is determined by measuring a color inside the at least two sub focus areas.

7. Method according to claim 6, **characterized in that** the at least two sub focus areas have a predefined overlap.

8. Method according to claim 6 or 7, **characterized in that** measuring the color inside the focus area (51 - 57, 61 - 63, 71 - 73, 81 - 83) includes multiple color measurements carried out in each one of the at least two sub focus areas to determine the color of the lane marking.

9. Method according to any of claims 1 to 8, **characterized in that** measuring the color inside the focus area (51 - 57, 61 - 63, 71 - 73, 81 - 83) is implemented as a deterministic algorithm.

10. Method according to any of claims 1 to 9, **characterized in that** determining the focus area (51 - 57, 61 - 63, 71 - 73, 81 - 83) inside the lane marking and determining the color of the lane marking by measuring the color inside the focus area (51 - 57, 61 - 63, 71 - 73, 81 - 83) is done using camera data provided by a camera (41) installed at the automated vehicle (4).

11. Method according to claim 10, **characterized in that** determining (S1) the focus area (51 - 57, 61 - 63, 71 - 73, 81 - 83) inside the lane marking (5 - 8) and/or determining the color of the lane marking (5 - 8) by measuring the color inside the focus area 51 - 57, 61 - 63, 71 - 73, 81 - 83) is done for at least two consecutive frames of the camera data, wherein the method includes crosschecking the determined color of the at least two consecutive frames of the camera data.

12. Method according to any of claims 1 to 11, **characterized in that** the method is carried out for at least two consecutive segments (6 - 8) of the lane marking (5 - 8).

13. Method according to claim 12, **characterized in that** the method includes crosschecking the determined color of the at least two consecutive segments (6 - 8) of the lane marking (5 - 8).

14. Control unit (42), **characterized in that** the control unit (42) is configured to carry out the method according to any of claims 1 to 13.

15. Automated vehicle (4), **characterized in that** the automated vehicle (4) comprises the control unit (42) according to claim 14.
